# EUROPEAN PATENT SPECIFICATION

(11) **EP 2 937 918 B1**
(45) Date of publication and mention of the grant of the patent: **24.10.2018**
(21) Application number: 15164835.9
(22) Date of filing: 23.04.2015
(51) Int. Cl.: H01M 4/587, H01M 10/0525, H01M 10/054, H01M 10/0569, H01M 4/36, H01M 4/505, H01M 4/58, H01M 4/62

(54) **HINDERED GLYMES FOR ELECTROLYTE COMPOSITIONS**
GEHINDERTE GLYME FÜR ELEKTROLYTZUSAMMENSETZUNGEN
COMPOSITIONS D'ÉLECTROLYTE POUR GLYMES ENCOMBRÉS

(30) Priority: 24.04.2014 EP 14382149
(43) Date of publication of application: 28.10.2015
(73) Proprietor: Fundación Centro de Investigación Cooperativa de Energías Alternativas, CIC Energigune Fundazioa, 01510 Miñano, Álava (ES)
(72) Inventor: Grugeon, Sylvie, F-60960 Feuquières (FR); Laruelle, Stéphane, F-80470 Saveuse (FR); Shanmukaraj, Devaraj, E-01006 Vitoria, Alava (ES); Armand, Michel, F-75014 Paris (FR)
(74) Representative: ABG Patentes, S.L.

(56) References cited:
- EP-A1- 2 270 917
- US-A- 4 753 859

## Description

### FILED OF THE INVENTION

The present invention relates generally to the field of electrochemical cells and batteries, and more particularly to an electrolyte for use in an electrochemical cell, such as secondary lithium and sodium batteries.

### BACKGROUND

Safety of lithium batteries is one of the major hurdle for their further development in all the fields of electrical energy storage, especially electric transportation. The main culprit is the electrolyte. Commercial lithium batteries use as electrolytes mixtures of at least one cyclic carbonate, the most common of which is ethylene carbonate (EC) to which various proportions of propylene carbonate (PC) can be optionally added. They are necessary to dissociate the lithium salt used as solute, as they are highly polar (ε > 60).

Because such cyclic carbonates are either solid (EC) at room temperature, or highly viscous (PC), co-solvents or thinners are usually added, the most common of which are dimethyl carbonate (DMC), diethyl carbonate (DEC) and ethyl-methylcarbonate (EMC). The solutes containing in the electrolyte compositions are usually selected from lithium salts with low lattice energy like LiBF₄, LiCF₃SO₃, Li[CF₃SO₂)₂N], LiPF₆. In practice, LiPF₆ is almost exclusively used because of its high conductivity and beside does not corrodes aluminum, the current collector, at potentials up to 4.5 V vs Li⁺:Li°.

However, the disadvantages of such prior art electrolytes are many. The co-solvents or thinners have low boiling points, and associated flash points (DMC bp=90 °C, fp=17°C; DEC, bp=127°C, fp= 33°C; EMC, bp=107 °C, fp=26.7°C), which involve safety issues due to their high vapor pressure, high flammability, and poor thermal stability leading to decomposition, vaporization and reaction of these organic solvents at fairly low temperatures (below 100°C). In fact, they are easily reduced at the potential of the negative electrode to the highly active species RO⁻ or R^{•} (R = CH₃ or C₂H₅) which can react quantitatively or even as catalyst to break down the anion PF₆⁻ or the cyclic carbonates. The results are both the electrolyte drying out, but, more preoccupying, the increase in the passivation layer resistance. Such increase in impedance gives rise to hot spots, the starting point of runaway reactions. In this case, with the sudden release of flammable species in the environment, PF₆⁻ is practically all hydrolysed to highly toxic HF.

Ionic liquids (ILs), more specifically room temperature ILs, which consists of an organic cation and an inorganic or organic anion, have been investigated over past decades for possible application as an electrolyte component in batteries, supercapacitors, due to their well-known advantages of high ionic conductivity, non-flammability, low vapor pressure, wide electrochemical stability window and their environmentally benign nature. However, a problem derived from the use of these ionic liquids is that, although they are thermally stable, they have poor wetting capabilities, such that when used with conventional anode electrodes such as carbon, tin, silicon, aluminum, they tend to form films on the electrodes, resulting also in high interfacial impedance.

Binary formulations of ionic liquids and lithium salts have also been investigated as electrolytes, as well as ternary mixtures consisting of ionic liquids, lithium salt and polymer gels based on polyethylene oxide (PEO). However, a drawback of these PEO based electrolytes is their low conductivity, which renders them unusable at room temperatures.

In addition to that, alternatives to linear carbonates used as co-solvents of cyclic carbonates have been sought. It is well known that the addition to cyclic carbonates of the so called "glymes", CH₃O(CH₂CH₂O)ₙCH₃, with n = 1, 2 and 3, forms highly conductive solutions, the reason invoked being the high solvation power of glymes for Li⁺, resulting in high ion-pair dissociation. Though the glymes are commonly used in primary batteries in the presence of lithium metal, they cannot be used in rechargeable lithium-ion batteries, where the negative electrode consists of graphite, because the lithium solvate exfoliates the graphite planes, resulting in low capacity and short life cycle.

This is the case, for example, of document EP2270917 which describes the use of glymes, more particularly diethylene glycol dialkylethers with the same alkyl chain, as electrolytes for secondary lithium batteries. Although said document mentions the possible use of graphite as component of the negative electrode of the battery, the data provided in the experimental part of the present document point out that glymes based on said compounds cannot be applicable to cells having a graphite negative electrode, as solvent co-intercalation followed by reduction of the organic component of the electrolyte is observed.

US 4,753,859 also describes the use of diethylene glycol dialkyl ethers as components or solvents of electrolytes where no graphite is used as negative electrode of the cells.

In view of that, there is still a need to develop electrolyte compositions for lithium secondary batteries having graphite as negative electrode, and other energy storage devices with improved safety properties and ionic conductivities, which also avoid the their co-intercalation in graphite with lithium and, therefore, the formation of passivation layers and, as a consequence of that, the interfacial impedance.

### BRIEF DESCRIPTION OF THE INVENTION

The authors of the present invention have developed a new electrolyte composition for its use in energy storage devices, and more particularly in lithium batteries as well as in rechargeable lithium batteries having graphite as active material of the negative electrode, wherein said electrolyte composition comprises hindered glymes.

These compounds, when used as a pure solvent of the electrolyte or in admixture with other solvents of high flash points, provide electrolytes with lower vapor pressure, and hence lower flash points than those of the prior art, thus significantly reducing the risk of flammability.

In addition to that, the hindered glymes used in the present invention do not co-intercalate in graphite, but the lithium desolvates and LiₓC₆ (0<x≤1.2) is formed instead, thus avoiding the interfacial impedance and increasing the capacity and life cycle of the battery.

Said electrolyte composition provides overall an increased ionic conductivity, improved charge/discharge cyclability of Li-ion batteries, lower cell impedance due to lower interfacial impedances, as well as improved safety over conventional organic electrolytes due to lower vapor pressure and lower flammability.

Furthermore, the advantages mentioned above can also be extended to electrolyte compositions used in sodium batteries and sodium rechargeable batteries.

Thus, a first aspect of the present invention refers to an electrochemical cell comprising:
a) an electrolyte composition comprising a sterically hindered glyme of formula (I): 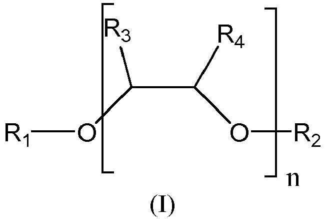 or mixtures thereof,
   wherein:
   n is 1 or 2;
   R₁ is a linear C₁-C₂ alkyl;
   R₂ is a linear or branched C₃-C₆ alkyl;
   R₃ is selected from H and methyl,
   R₄ is selected from H and methyl;
   with the proviso that R₃ and R₄ can not be simultaneously a methyl group; and
b) a negative electrode, wherein said negative electrode comprises a negative electrode material comprising graphite.

In a particular embodiment, the electrolyte composition comprised in the electrochemical cell of the invention further comprises a co-solvent and a lithium or sodium salt.

A second aspect of the present invention relates to an energy storage device comprising at least an electrochemical cell as defined above.

In a particular embodiment, the energy storage device is a battery, a supercapacitor or an asymmetric battery-supercapacitor. More particularly, the energy storage device is a battery, more particularly is a secondary battery.

Thus, a third aspect of the invention refers to a battery comprising at least an electrochemical cell as described above.

In a particular embodiment, said battery comprises: a) at least an electrolyte composition as defined above and; b) at least a negative electrode, said negative electrode comprising a negative electrode material comprising graphite; and c) at least a positive electrode.

Particularly, the battery is a lithium or sodium battery, more particularly is a secondary lithium or sodium battery.

The invention also relates to a method of making a battery comprising: a) providing at least an electrolyte composition as defined above; b) providing at least a negative electrode comprising a negative electrode material comprising graphite; c) providing at least a positive electrode; d) providing a cell housing; and e) assembling the at least an electrolyte composition, the at least a positive electrode and the at least a negative electrode into the cell housing.

### BRIEF DESCRIPTION OF THE FIGURES

Figure 1 shows the galvanostatic cycling capacity of SFG6 graphite electrodes with the following electrolyte compositions: (a) EC/DMC/LiPF₆ (▼ charge; Δ discharge) and b) EC/diethylene glycol ethyl-tert butyl ether/LiFSI (◆ charge; ◊ discharge) at room temperature (25°C) along with the coulombic efficiency.
Figure 2 shows the galvanostatic cycling capacity of SFG6 graphite electrodes with the electrolyte composition EC/ diethylene glycol ethyl-*tert* butyl ether /LiFSI at (a) 55°C and b) 70°C.
Figure 3 shows SEM micrographs and first galvanostatic discharge curves of SFG6 graphite with a PVDF binder and the following electrolyte compositions: (a) EC/DMC/LiPF₆, (b) EC/diethylene glycol ethyl-*tert* butyl ether/LiFSI, (c) EC/DP/LiFSI and (d) PC/LiFSI.
Figure 4 shows the rate capability tests of SFG6 graphite electrodes with the following electrolyte compositions: a) EC/DMC/LiPF₆ (▲); (b) EC/ diethylene glycol ethyl-*tert* butyl ether /LiFSI (■).
Figure 5 shows the temperature dependant conductivity tests of EC/DMC/LiPF₆ (▲);
EC/ diethylene glycol ethyl-*tert* butyl ether /LiFSI (●); EC/ethylene glycol-tert butyl ether/LiFSI (□) electrolytes.
Figure 6 shows the galvanostatic cycling capacity of SFG6 graphite electrodes with the electrolyte composition EC/dibutyl diglyme/LiFSI. (●) discharge; (○) charge.
Figure 7 shows the rate capability tests of SFG6 graphite electrodes with the following electrolyte composition: EC/DMC/LiPF₆ (▲), EC/ethylene glycol methyl-tert butyl ether/ 1M LiFSI (□).
Figure 8 shows the voltage profile plot of SFG6 graphite electrodes cycled at a C-rate of C/20 with the following electrolyte composition: (-) diethylene glycol dimethyl ether/fluoroether/LiPF6; (----) diethylene glycol ethyl-*tert*-butyl ether /EC/LiFSI.
Figure 9 shows the voltage profile plot of SFG6 graphite electrodes cycled at a C-rate of C/20: (-) triethylene glycol dimethyl ether/EC/LiPF6; (----) diethylene glycol ethyl-*tert*-butyl ether /EC/LiFSI.

### DETAILED DESCRIPTION OF THE INVENTION

Unless defined otherwise, all technical and scientific terms used herein have the same meaning as commonly understood by one of ordinary skill in the art to which this invention belongs. Notwithstanding above, some particular terms have the meaning as indicated below:
The term "hindered glyme" refers to a sterically hindered glycol ether, such as a mono- and diethylene glycol, mono- and dipropylene glycol, as defined in formula (I) of the present invention.

The term "linear C₁-C₂ alkyl" refers to a linear hydrocarbon chain radical, said chain consisting of 1 to 2 carbon atoms, containing no insaturation, and which is attached to the rest of the molecule by a single bond, e. g., methyl or ethyl.

The term "linear or branched C₃-C₆ alkyl" refers to a linear or branched hydrocarbon chain radical, said chain consisting of 3 to 6 carbon atoms, preferably, 3 to 4 carbon atoms, containing no insaturation, and which is attached to the rest of the molecule by a single bond, e. g., n-propyl, i-propyl, n-butyl, t-butyl, etc.

The term 5 to 7-membered ring structure refers to a saturated cycle formed by the bond of R₁ and R₃, leading to a cyclic structure having one oxygen atom and 4 to 6 carbon atoms.

In a more preferred embodiment R₁ is methyl. In another more preferred embodiment, R₁ is ethyl.

In another disclosed embodiment, R₁ forms together with R₃ a 5 to 7-membered ring structure having from 4 to 6 carbon atoms, respectively.

In another preferred embodiment, R₂ is selected from n-propyl, iso-propyl, n-butyl, iso-butyl, sec-butyl and tert-butyl.

In another preferred embodiment, R₃ is H. In another preferred embodiment, R₃ is methyl. In another disclosed embodiment, R₃ forms together with R₁ a 5 to 7-membered ring structure having from 4 to 6 carbon atoms, respectively.

In another preferred embodiment, R₄ is H. In another preferred embodiment, R₄ is methyl.

In another preferred embodiment n is 1. In another preferred embodiment n is 2.

Even more preferably, the sterically hindered glyme of formula (I) is selected from the following compounds (the tetrahydrofurfuryl ethers are outside the scope of the claims): 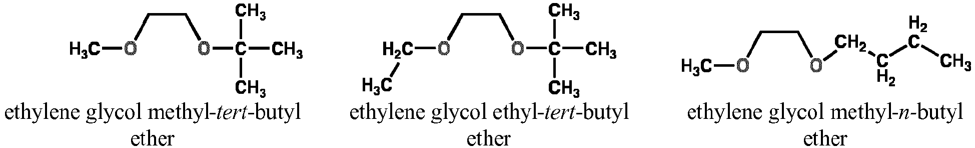 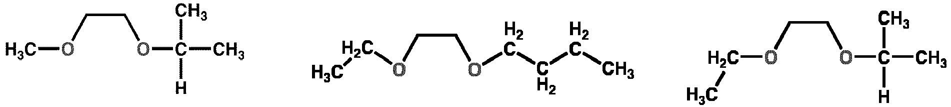 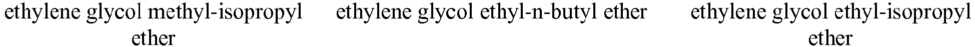 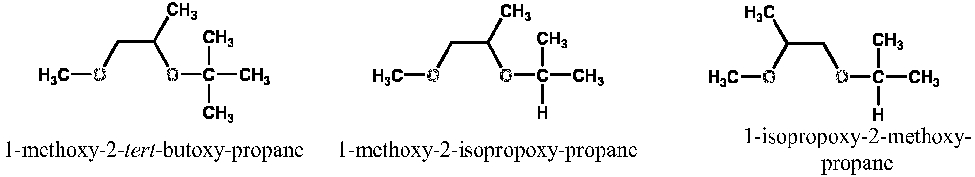 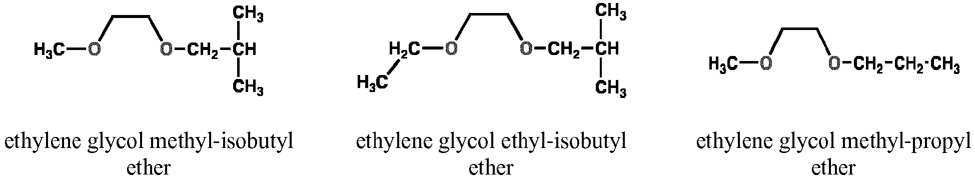 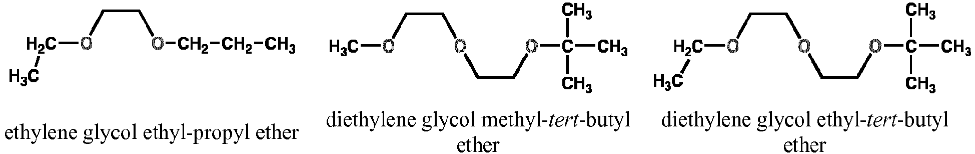 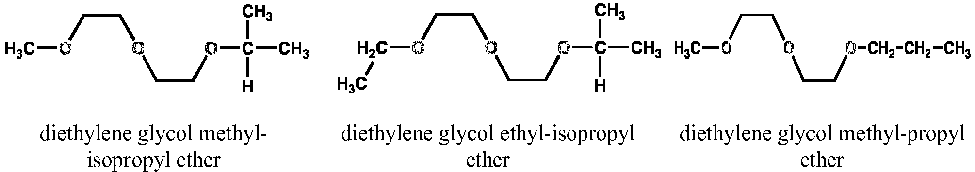 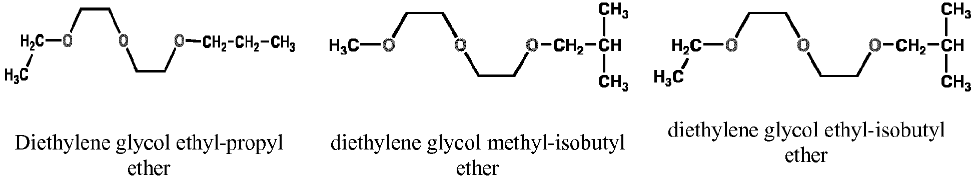 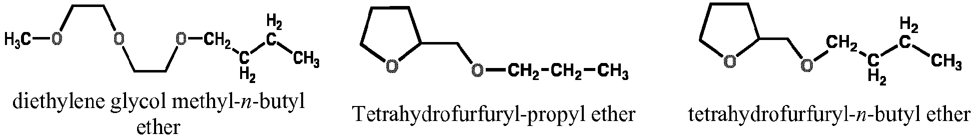 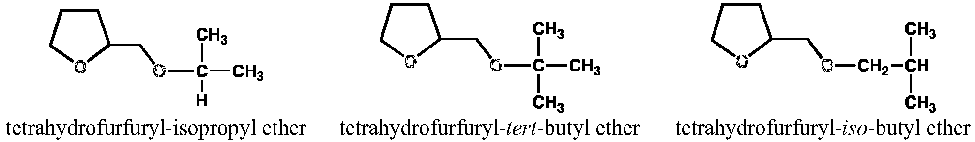 and mixtures thereof.

The synthesis of the hindered glymes comprised in the invention can be made in a small number of steps from commercial starting materials according to the following reaction: 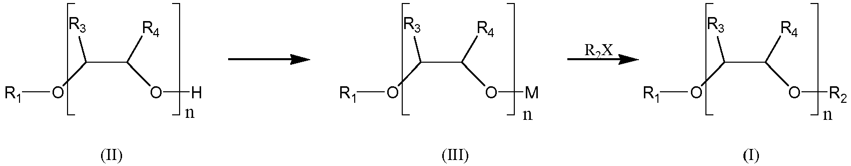 wherein
n, R₁, R₂, R₃ and R₄ are as defined above,
M is an alkali metal selected from Li, Na, K and ½ Ca, and
X is a leaving group selected from Cl, Br, I, CH₃SO₃, C₅H₅SO₃, CH₃C₆H₄SO₃, CF₃SO₃, R'OSO₃, being R' al alkyl or aryl group.

Thus, the appending of the radical R² on the hydroxyl group of the compound of formula (II) is easily obtained through the Williamson method, by reaction of an alkali metal derivative of the alcohol of formula (II) on the desired electrophiles R²X, wherein X is a leaving group.

The compounds of formula (II) correspond to mono- or di-ethylene glycol monoalkyl ethers, mono- or di-propylene glycol monoalkyl ethers or tetrahydrofurfuryl alcohol, compounds which are commercially available.

In the particular case when R² is *tert*-butyl, the hindered glyme of formula (I) can be obtained by the acid-catalysed addition of isobutene on the hydroxyl group of the compound of formula (II) according to the following reaction: 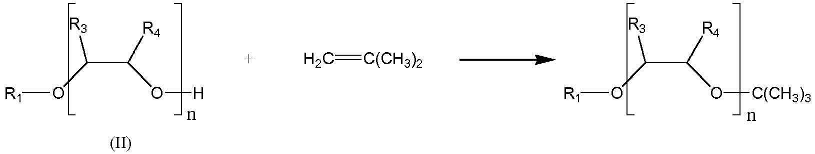 wherein n, R₁, R₃ and R₄ are as defined above.

These types of reactions are described in "The chemistry of the ether linkage" Saul Patai ed., Interscience Publisher (J. Wiley and son) London, 1967.

The compound of formula (I) may act as a solvent in the electrolyte composition to solvate lithium or sodium salts, and has good compatibility with lithium and sodium metal.

Thus, in a preferred embodiment, the electrolyte composition further comprises a lithium or sodium salt. Any soluble lithium or sodium salt may be used in the present invention. However, lithium or sodium salts having good ionic conductivity due to a low lattice energy (i.e., high degree of dissociation), and high thermal stability and oxidation resistance are preferred.

Examples of lithium salts which can be used in the present invention include, but are not limited to, lithium tetrafluoroborate LiBF₄, lithium hexafluorophosphate LiPF₆, lithium hexafluoroarsenate LiAsF₆, lithium iodide LiI, lithium trifluoromethane sulfonate LiCF₃SO₃, lithium bis(trifluoromethanesulfonyl)imide Li[(CF₃SO₂)₂N], lithium bis(perfluoroethylsulfonyl)imide Li[(CF₃CF₂SO₂)₂N], Li[(C₂F₅SO₂)₂N], lithium bis(fluorosulfonyl)imide Li[(FSO₂)₂N], Li[(FSO₂)(C₄F₉SO₂)N], lithium (perfluoroethylsulfonyl)(fluorosulfonyl) imide Li[(FSO₂)(CF₃CF₂SO₂)N], lithium perchlorate LiClO₄, lithium bis(oxalato)borate LiB(C₂O₄)₂, lithium oxalatodifluoroborate Li[BF₂C₂O₄], the lithium salt of 4,5-dicyano-1,2,3-triazole, the lithium salt of 4,5-dicyano-2-trifluoromethyl-imidazole, the lithium salt of 4,5-dicyano-2-pentafluoroethyl-imidazole, or mixtures thereof.

Examples of sodium salts which can be used in the present invention include, but are not limited to, sodium tetrafluoroborate NaBF₄, sodium hexafluorophosphate NaPF₆, sodium hexafluoroarsenate NaAsF₆, sodium iodide NaI, socium trifluoromethane sulfonate NaCF₃SO₃, sodium bis(trifluoromethanesulfonyl)imide Na[(CF₃SO₂)₂N], sodium bis(perfluoroethylsulfonyl)imide Na[(CF₃CF₂SO₂)₂N], Na[(C₂F₅SO₂)₂N], sodium bis(fluorosulfonyl)imide Na[(FSO₂)₂N], Na[(FSO₂)(CF₃CF₂SO₂)N], sodium (perfluoroethylsulfonyl)(fluorosulfonyl) imide Na[(FSO₂)(CF₃CF₂SO₂)N], sodium perchlorate NaClO₄, sodium bis(oxalato)borate NaB(C₂O₄)₂, sodium oxalatodifluoroborate Na[BF₂C₂O₄], the sodium salt of 4,5-dicyano-1,2,3-triazole, the sodium salt of 4,5-dicyano-2-trifluoromethyl-imidazole, the sodium salt of 4,5-dicyano-2-pentafluoroethyl-imidazole, and mixtures thereof.

In another preferred embodiment, the electrolyte composition comprised in the electrochemical cell of the invention further comprises a co-solvent. In the context of the present invention by "co-solvent" is understood a compound which, as compared to the single solvent, can improve the dielectric constant, the conductivity, especially a lower temperature, contribute to the building a favourable interfacial protective film at the interface (known to the man skilled in the art as "SEI", solid electrolyte interface). The addition of polymers result in the formation of gels which have advantages in terms of processing in thin films and increasing the overall safety of the battery.

Suitable co-solvents to be used in the present invention may be any liquid, solid or gel compound capable of storing and transporting ions, so long as the compound is substantially electrochemically and chemically unreactive with respect to the anode and the cathode, and the compound facilitates the transport of ions between the anode and the cathode. The co-solvent must also be electronically non-conductive to prevent short-circuiting between the anode and the cathode.

These co-solvents include, but are not limited to, organic solvents comprising a liquid organic solvent, a gel organic solvent and a solid organic solvent; or ionic compounds having an organic cation and an inorganic anion. Examples of these co-solvents include, but are not limited to, families such as acetals, ketals, sulfones, sulfonamides and cyclic carbonates.

In a preferred embodiment of the invention the co-solvent is selected from ethylene carbonate (EC), propylene carbonate (PC), dimethyl sulfone (DMS), ethyl-methyl-sulfone (EMS), tetramethylene sulfone (TMS), succinonitrile, adiponitrile, glutaronitrile, N-methyloxazolidinone, a tetraalkyl sulfonamide of formula R⁵R⁶NSO₂NR⁵R⁶ where R⁵ and R⁶ are methyl or ethyl, tetramethylurea, 1,3-Dimethyl-2-imidazolidinone (DMEU), 1,3-Dimethyl-3,4,5,6-tetrahydro-2(1H)-pyrimidinone (DMPU) and mixtures thereof.

In a more preferred embodiment of the present invention, the electrolyte composition comprises a hindered glyme of formula (I), a lithium or sodium salt and a co-solvent such as those defined above.

Said electrolyte composition as defined above can be made by a process which comprises: a) providing a hindered glyme of formula (I), b) providing a lithium or sodium salt; c) providing a co-solvent, and d) mixing the hindered glyme, the lithium or sodium salt and the co-solvent.

In a particular embodiment, the hindered glyme of formula (I) is present in an amount ranging from 20 to 95% by weight, even more preferably from 40 to 60% by weight, whereas the co-solvent is provided in an amount ranging from 5 to 80% by weight, all based on the total weight of the mixture of the hindered glyme and the co-solvent.

In said mixture, the lithium or sodium salt is dissolved to reach a concentration from 0.1 to 4 M, more preferably from 0.7 to 1.8 M.

The electrolyte composition provides overall an increased ionic conductivity, improved charge/discharge cyclability of ion batteries, lower cell impedance due to lower interfacial impedances, as well as improved safety over conventional organic electrolytes due to lower vapor pressure and lower flammability. Additionally, said composition does not co-intercalate with lithium or sodium in the electrode-containing graphite.

The electrolyte composition comprised in the electrochemical cell of the invention is liquid at its intended use temperature, and has characteristics, such as those mentioned above, that make it suitable for use in energy storage devices.

The electrochemical cell of the present invention further comprises a negative electrode, said negative electrode comprising a negative electrode material comprising graphite.

In a particular embodiment, the negative electrode material comprises graphite, natural or artificial, pure or admixed with non-graphitic carbon.

The negative electrode material may be formed either in situ or as a native film. The term "native film" is well understood in the art, and refers to a surface film that is formed on the electrode surface upon exposure to a controlled environment prior to contacting the electrolyte. The exact identity of the film will depend on the conditions under which it is formed, and the term encompasses these variations. In a preferred embodiment, it is formed as a native film.

The negative electrode material may alternatively be formed in situ, by reaction of the negative electrode surface with the electrolyte.

The negative electrode of the electrochemical cell of the invention may further comprise a metal substrate. The metal substrate may also have the role of current collector in the electrochemical cell. The metal substrate may be any suitable metal or alloy, and may for instance be formed from one or more of the metals Pt, Au, Ti, Al, W, Cu or Ni.

In a particular embodiment, the electrochemical cell of the present invention comprises:
a) an electrolyte composition comprising a sterically hindered glyme of formula (I) as described above;
b) a negative electrode comprising a negative electrode material comprising graphite as described above; and
c) a positive electrode.

In a particular embodiment, the electrolyte composition can further include a lithium or sodium salt such as those mentioned above. In another particular embodiment, the electrolyte composition can further include a co-solvent such as those mentioned above The positive electrode should be made from a material suitable for providing high energy density while not compromising the safety now increased by the electrolyte composition of the invention. The positive electrode may be formed from any typical lithium intercalation material, such as transition metal oxides and their lithium compounds.

In a particular embodiment, the positive electrode material is selected from layered lithium oxides LiₓM'O₂ (M' = Co, Ni, Mn); spinels LiₓMnO₄, where in both cases a fraction of less than 15% of the transition elements (M', Mn) can be replaced by Al, Mg or Li; lithium phosphates LiₓM"PO₄ (M" = Fe, Mn), where a fraction of less than 10% of the transition element (M") can be replaced by Mg; lithium fluoro phosphates Li₁₊ₓFePO₄F or LiₓFePO₃F₂; lithium fluoro sulfate LiₓFeSO₄F; where in all cases 0 ≤ x ≤ 1, and mixtures thereof. More preferably, the positive electrode material is selected from LiₓM"PO₄ and LiₓFeSO₄F.

As known in the art, transition metal oxide composite material can be mixed with a binder such as a polymeric binder, and any conductive additives before being applied to or formed into a current collector of appropriate shape.

Another aspect of the invention refers to an energy storage device comprising at least an electrochemical cell as defined above.

The term "energy storage device" encompasses any device that stores or holds electrical energy, and includes a battery, a supercapacitor or an asymmetric (hybrid) battery-supercapacitor. More particularly, the energy storage device is a battery. The term battery also encompasses single cells as those mentioned above.

Actually, a further aspect of the invention refers to a battery comprising at least an electrochemical cell as described above.

In a particular embodiment, the battery comprises: a) at least an electrolyte composition as defined above and; b) at least a negative electrode comprising a negative electrode material comprising graphite; and c) at least a positive electrode. Particularly, the battery is a lithium or sodium battery.

Lithium batteries encompass both lithium ion batteries and lithium metal batteries, whereas sodium batteries encompass both sodium ion batteries and sodium metal batteries.

More preferably the lithium battery is a secondary lithium battery.

More preferably, the sodium battery is a secondary sodium battery.

Secondary lithium or sodium batteries are lithium or sodium batteries which are rechargeable. The combination of the electrolyte and the negative electrode of such batteries must be such as to enable both plating/alloying (or intercalation) of lithium or sodium onto the electrode (i.e. charging) and stripping/dealloying (or de-intercalation) of lithium or sodium from the electrode (i.e. discharging).

More particularly, the battery comprises: a) an electrolyte composition comprising a hindered glyme of formula (I) as defined above, a lithium or sodium salt and a co-solvent; b) at least a negative electrode comprising a negative electrode material comprising graphite; and c) at least a positive electrode.

It should be pointed out that the terms anode and cathode as commonly used in battery literature can be confusing and misleading, particularly in connection with rechargeable/secondary batteries and this is the reason to include the terms negative electrode and positive electrode in the composition of the battery of the invention, as well as in the composition of the electrochemical cell of the invention, as they confer a more correct designation.

The negative electrode corresponds to what is usually called the anode, and the positive electrode corresponds to what is usually called cathode. Accurately speaking, the negative electrode is only an anode (the electrode at which an oxidation reaction is taking place) during the discharge process. During recharge, the negative electrode operates as a cathode (the electrode at which a reduction reaction is taking place). Correspondingly, the positive electrode operates as a cathode during discharge only. During recharge, the positive electrode operates as an anode. Thus, as used throughout this application, the terms negative and positive electrodes are employed and are to be read consistent with the terminology of this paragraph.

Furthermore, the battery of the invention can include a metal foil current collector to conduct current to and from the positive and negative electrodes.

In a particular embodiment, the invention refers to a lithium battery comprising: a) an electrolyte composition as defined above and; b) at least a negative electrode comprising a negative electrode material comprising graphite; and c) at least a positive electrode. More preferably, the lithium battery is a secondary/rechargeable lithium battery.

More particularly, the lithium battery comprises: a) an electrolyte composition comprising a hindered glyme of formula (I) as defined above, a lithium salt and a co-solvent; b) at least a negative electrode comprising a negative electrode material comprising graphite; and c) at least a positive electrode.

Any soluble lithium salt may be used in the lithium battery of the present invention. However, lithium salts having good ionic conductivity, high thermal stability and oxidation resistance are preferred.

Examples of lithium salts which can be used in the lithium battery include, but are not limited to, lithium tetrafluoroborate LiBF₄, lithium hexafluorophosphate LiPF₆, lithium hexafluoroarsenate LiAsF₆, lithium iodide LiI, lithium trifluoromethane sulfonate LiCF₃SO₃, lithium bis(trifluoromethanesulfonyl)imide Li[(CF₃SO₂)₂N], lithium bis(perfluoroethylsulfonyl)imide Li[(CF₃CF₂SO₂)₂N], lithium bis(fluorosulfonyl)imide Li[(FSO₂)₂N], lithium (perfluoroethylsulfonyl)(fluorosulfonyl) imide Li[(FSO₂)(CF₃CF₂SO₂)N], lithium perchlorate LiClO₄, lithium bis(oxalate)borate LiB(C₂O₄)₂, the lithium salt of 4,5-dicyano-1,2,3-triazole, the lithium salt of 4,5-dicyano-2-trifluoromethyl-imidazole, the lithium salt of 4,5-dicyano-2-pentafluoroethyl-imidazole, or mixtures thereof.

The co-solvent is preferably selected from ethylene carbonate (EC), propylene carbonate (PC), dimethyl sulfone (DMS), ethyl-methyl-sulfone (EMS), tetramethylene sulfone (TMS), succinonitrile, adiponitrile, glutaronitrile, N-methyloxazolidinone, a tetraalkyl sulfonamide of formula R⁵R⁶NSO₂NR⁵R⁶ where R⁵ and R⁶ are methyl or ethyl, and mixtures thereof.

The negative electrode of the lithium battery of the invention is that previously described for the electrochemical cell of the invention.

The positive electrode may be formed from any typical lithium intercalation material, such as transition metal oxides and their lithium compounds.

In a particular embodiment, the positive electrode material is selected from layered lithium oxides LiₓM'O₂ (M' = Co, Ni, Mn); spinels LiₓMnO₄, where in both cases a fraction of less than 15% of the transition elements (M', Mn) can be replaced by Al, Mg or Li; lithium phosphates LiₓM"PO₄ (M" = Fe, Mn), where a fraction of less than 10% of the transition element (M") can be replaced by Mg; lithium fluoro phosphates Li₁₊ₓFePO₄F or LiₓFePO₃F₂; lithium fluoro sulfate LiₓFeSO₄F; where in all cases 0 ≤ x ≤ 1, and mixtures thereof. More preferably, the positive electrode material is selected from LiₓM"PO₄ and LiₓFeSO₄F.

As known in the art, transition metal oxide composite material can be mixed with a binder such as a polymeric binder, and any conductive additives before being applied to or formed into a current collector of appropriate shape.

In another particular embodiment, the invention refers to a sodium battery comprising: a) an electrolyte composition as defined above and; b) at least a negative electrode comprising a negative electrode material comprising graphite; and c) at least a positive electrode. More preferably, the sodium battery is a secondary/rechargeable sodium battery.

More particularly, the sodium battery comprises: a) an electrolyte composition comprising a hindered glyme of formula (I) as defined above, a sodium salt and a co-solvent; b) at least a negative electrode comprising a negative electrode material comprising graphite; and c) at least a positive electrode.

Any soluble sodium salt may be used in the sodium battery of the present invention. However, sodium salts having good ionic conductivity, high thermal stability and oxidation resistance are preferred.

Examples of sodium salts which can be used in the present invention include, but are not limited to sodium tetrafluoroborate NaBF₄, sodium hexafluorophosphate NaPF₆, sodium hexafluoroarsenate NaAsF₆, sodium iodide NaI, sodium trifluoromethane sulfonate NaCF₃SO₃, sodium bis(trifluoromethanesulfonyl)imide Na[(CF₃SO₂)₂N], sodium bis(perfluoroethylsulfonyl)imide Na[(CF₃CF₂SO₂)₂N], sodium bis(fluorosulfonyl)imide Na[(FSO₂)₂N], sodium (perfluoroethylsulfonyl)(fluorosulfonyl) imide Na[(FSO₂)(CF₃CF₂SO₂)N], sodium perchlorate NaClO₄, sodium bis(oxalato)borate NaB(C₂O₄)₂, sodium oxalatodifluoroborate Na[BF₂C₂O₄], the sodium salt of 4,5-dicyano-1,2,3-triazole, the sodium salt of 4,5-dicyano-2-trifluoromethyl-imidazole, the sodium salt of 4,5-dicyano-2-pentafluoroethyl-imidazole, and mixtures thereof.

The co-solvent is preferably selected from ethylene carbonate (EC), propylene carbonate (PC), dimethyl sulfone (DMS), ethyl-methyl-sulfone (EMS), tetramethylene sulfone (TMS), succinonitrile, adiponitrile, glutaronitrile, N-methyloxazolidinone, a tetraalkyl sulfonamide of formula R⁵R⁶NSO₂NR⁵R⁶ where R⁵ and R⁶ are methyl or ethyl, tetramethylurea, 1,3-dimethyl-2-imidazolidinone (DMEU), 1,3-Dimethyl-3,4,5,6-tetrahydro-2(1H)-pyrimidinone (DMPU) and mixtures thereof.

The negative electrode of the lithium battery of the invention is that previously described for the electrochemical cell of the invention.

The positive electrode may be formed from any typical sodium intercalation material, such as transition metal oxides and their sodium compounds.

In a particular embodiment, the positive electrode material is selected from NaₓFe_{1-y}Mn_{y}PO₄ of the olivine structure (0 ≤ x, y ≤ 1), NaₓMn_{1-y}Cr_{y}O₂, FePO₄F, NaₓFePO₃F₂, Na_{z}Fe_{0.5}Mn_{0.5}O₂ (0 ≤ x, y ≤ 1; 0.1 ≤ z ≤ 1), and mixtures thereof.

As known in the art, transition metal oxide composite material can be mixed with a binder such as a polymeric binder, and any conductive additives before being applied to or formed into a current collector of appropriate shape.

The invention also relates to a method of making a battery comprising: a) providing an electrolyte composition as defined above; b) providing a negative electrode comprising a negative electrode material comprising graphite; c) providing a positive electrode; d) providing a cell housing; and e) assembling the electrolyte composition, the positive electrode and the negative electrode into the cell housing.

Batteries of the present invention may be made in a variety of sizes and configurations in any suitable fashion which are known to those skilled in the art. These battery design configurations include, but are not limited to, planar, prismatic, jelly roll, w-fold, stacked and the like. Batteries may be of any size or shape and may comprise one or more cells according to the invention which may be encased in a rigid casing.

The present invention will now be described in further detail with reference to the following non-limiting examples.

### Examples

### Example 1. Galvanostatic cycling capacity tests on Swagelok cells comprising an electrolyte composition having diethylene glycol ethyl-tert-butyl ether as hindered glyme electrolyte.

Swagelok® cells were assembled in an argon-filled dry glove box. Graphite films (SFG6) were separated from a lithium foil piece and used as the negative electrode, by a Whatman® GF/D borosilicate glass fibre mat imbibed with a glyme electrolyte solution. The glyme electrolyte solution was prepared by mixing a 1M Li[(FSO₂)₂N] (LiFSI) solution in a mixture of ethylene carbonate/diethylene glycol ethyl-tert-butyl ether (hereafter tert-G2) (50/50 w/w).

For comparative purposes, another set of Swagelok cells was built using as electrolyte a solution comprising 1M LiPF6 solution in ethylene carbonate (EC)/ dimethyl carbonate (DMC) (50/50 w/w).

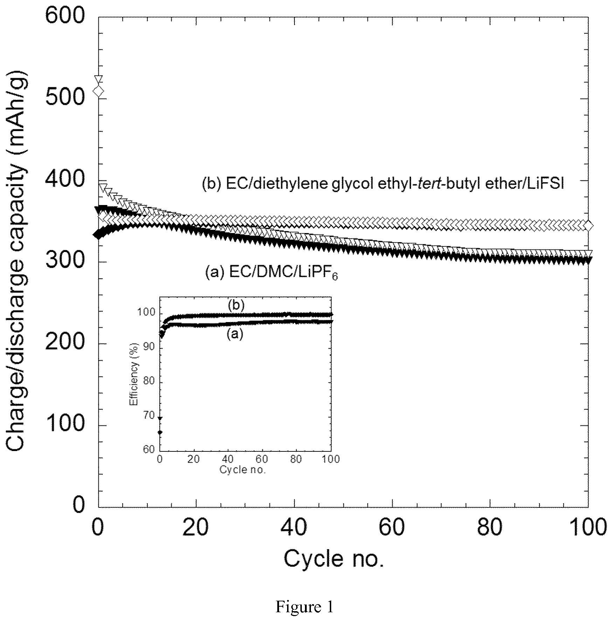

Once assembled, the swageloks cells were cycled between 0.01 and 1.5 V in galvanostatic mode (0.15 mAcm 2) using a MacPile (Biologic®, Claix, France) system at a C rate of C/20. In order to study the exfoliation behaviour in graphite electrodes the graphite electrodes were charged (lithiated) at a C-rate of C/20 with electrolytes. Figure 1 shows the cycling behaviour of the cells. As evidenced, the electrolyte containing the hindered tert-G2 glyme show stable performance, while the comparison state-of-the art electrolyte shows appreciable decline after 100 cycles. The cells were then dismantled and the graphite electrodes washed with dry DMC, followed by drying in Argon atmosphere.

### Example 2. Galvanostatic cycling capacity tests at different temperatures

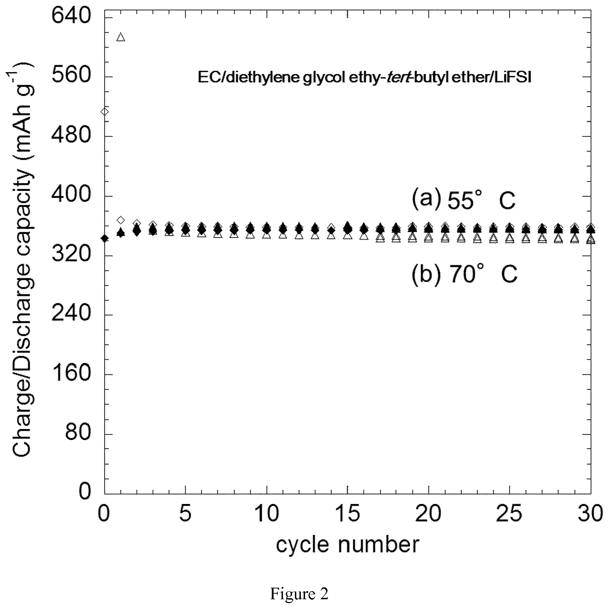

Swagelok® cells as those defined in example 1 with the EC/tert-G2 electrolytes were cycled for one series at 55°C and for another series at 70°C. Similarly to example 1, the cycling was stable. Figure 2 shows the results for the 30 first cycles. In such conditions, especially at 70°C, it is impossible to cycle the EC/DMC LiPF₆ state-of-the art electrolyte.

### Example 3. Galvanostatic discharge tests on cells having different electrolyte composition.

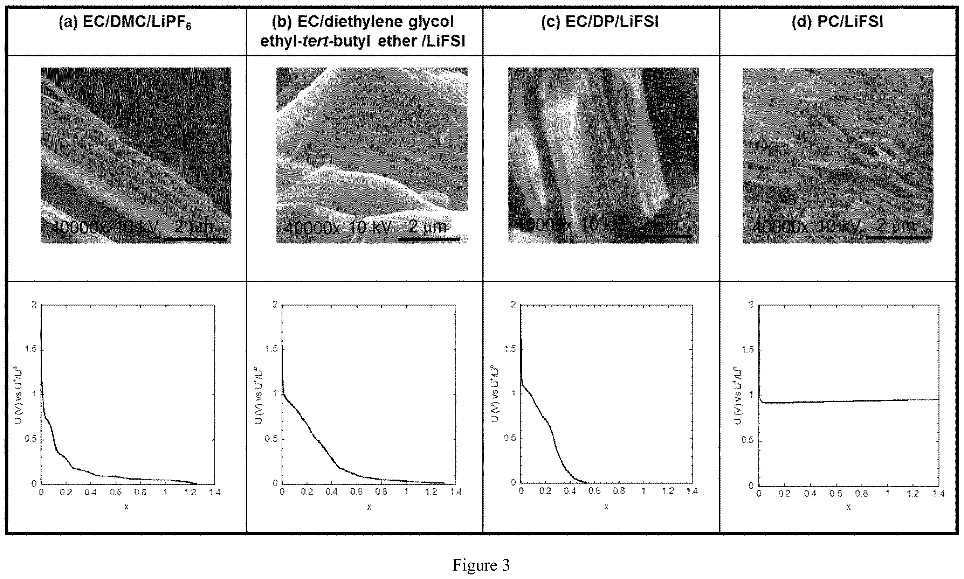

In addition to the cells made with the electrolytes of example 1, two new series of cells were constructed: one with a non-hindered glyme, dipropyleneglycol dimethyl ether (DP glyme) in a proportion EC/DG 50:50 w/w and 1 M LIFSI solute; a second with propylene carbonate (PC). The four types of cells were lithiated cycle down to 0.01V, then dismantled in the dry-box and the graphite electrodes were washed with dry DMC, followed by drying in Argon atmosphere. The electrodes were examined with a scanning electron microscope, SEM (Philips XL30) to look for delamination of the graphitic planes at 40000x magnification. The micrographs in Figure 3 (upper part) clearly show the absence of exfoliation for the hindered glymes and for the commercial 1M LiPF₆ EC/DMC electrolyte. The unhindered glyme and the PC electrolytes show extensive exfoliation as reported for the latter (AN Dey and BP Sullivan, J. Electrochem. Soc., 117, 222 (1970)). In the galvanostatic discharge traces, the behaviour of DP glyme is however different from that of PC, the former shows a reduced capacity due to the formation of a ternary Liₓ(DP)_{y}C₆ (x, y << 1) while the latter reveals a continuous reduction of PC into propylene and Li₂CO₃.

### Example 4. Rate capability tests on cells having diethylene glycol ethyl-tert-butyl ether as hindered glyme.

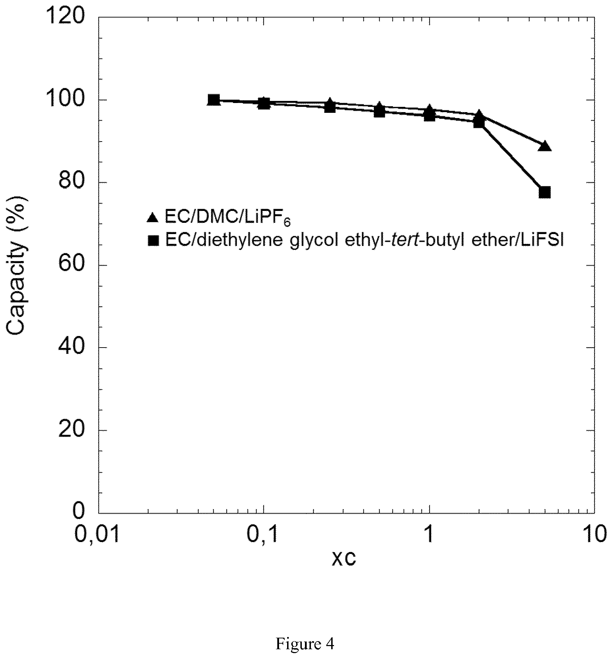

The cells of example 1 were tested for assessing their ability to deliver power as a function of the rate of discharge (C/n rate). The capacity at C/20 (discharge in 20 hours) was chosen as the reference to 100% capacity. In Figure 4, the plot of the remaining capacity when the rate is increased from C/20 to 5C shows that the capacity remains constant with the EC/Tert-G2/ 1M LiFSI to 2C, despite the fact that this electrolyte is more viscous than the reference commercial electrolyte EC/DMC/LiPF₆. The flash point of the electrolyte of the invention is fair higher than that containing volatile DMC (16.7 °C), i.e. too close to room temperature.

### Example 5. Temperature dependant conductivity tests.

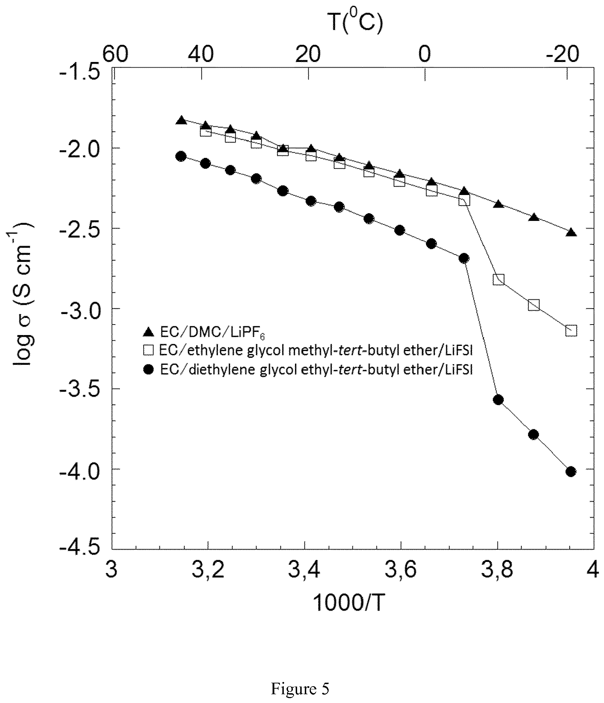

In addition to the two electrolytes of example 1, a third electrolyte was made with EC and the hindered glyme ethylene glycol methyl-tert-butyl ether (hereafter *tert*-G1) in a proportion 50 w/w with 1 M LIFSI as solute. The conductivity of the three electrolytes, as a function of the temperature expressed as 1000/T, is shown in Figure 5. As can been seen, both the electrolytes with hindered glymes have slightly lower conductivities than the reference EC/DMC/LiPF₆, but comparable, with no reduction in terms of specific power as shown in example 4, and for both glymes, a reduced flash point as compared to the DMC containing samples.

### Example 6. Galvanostatic cycling capacity tests on Swageloks cells comprising an electrolyte composition having diethylene glycol dibutyl ether (outside the scope of the claims) as hindered glyme electrolyte.

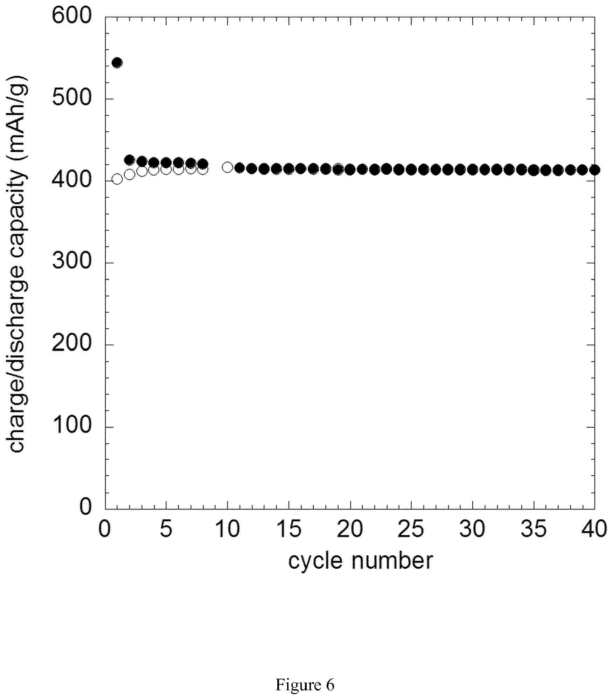

Commercial (Aldrich®) diethylene glycol dibutyl ether (hereafter dibutyl diglyme) was purified by mixing with sodium hydride followed by distillation. An electrolyte was made from EC and dibutyl diglyme (50:50 w/w) in which 1M LiFSI was dissolved. Swageloks cells as in example 1 were built and were cycled between 0.01 and 1.5 V in galvanostatic mode at C/20 rate. Figure 6 shows the first 40 cycles of one cell showing stable performance and a charge/discharge ration of 100% beyond the 10^{th} cycle.

### Example 7. Rate capability tests on cells having ethylene glycol methyl-tert-butyl ether as hindered glyme.

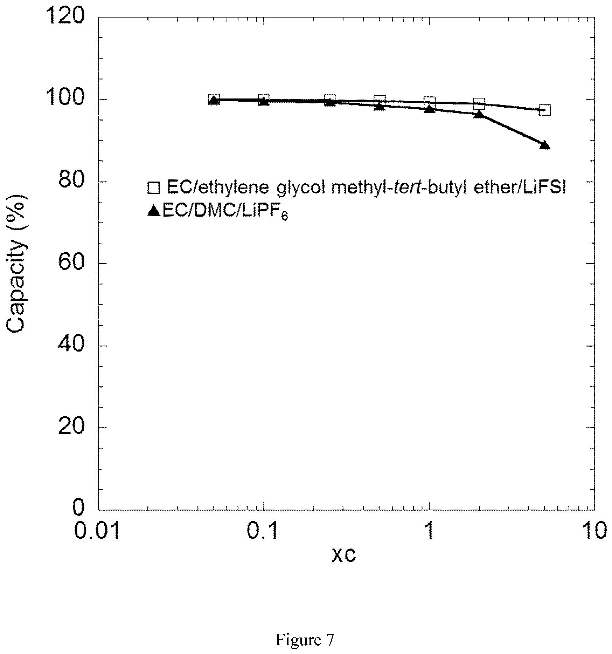

Cells built as example 1 were tested for their ability to deliver power as a function of the rate of discharge (C/n rate). The electrolyte was in this case a mixture of EC and ethylene glycol methyl-tert-butyl ether (*tert*-G1), 50:50 w/w with 1 M LIFSI as solute. The capacity at C/20 (discharge in 20 hours) was chosen as the reference to 100% capacity. In Figure 7, the plot of the remaining capacity when the rate is increased from C/20 to 5C shows that the capacity retention with EC/ *tert*-G1 / 1M LiFSI is superior to that of the state-of the art electrolyte EC/DMC/ 1M LiPF₆ especially at rates > 1C.

### Comparative example 1.

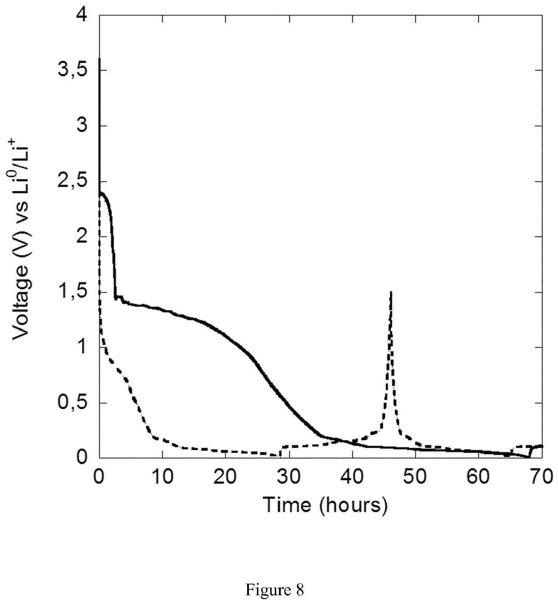

An electrolyte was made according to example 8 of EP 2 270 917 A1 by mixing 5.35 g of diethylene glycol dimethyl ether, 4.6 of anhydrous LiPF6 with 30 mL of 2,2,2-trifloroethyl-1',1',2',2' tetrafluoroethyl ether (referred in industry HFE347pcf). This electrolyte was used in an electrochemical cell having a lithium metal/electrolyte under testing/graphite configuration. The graphite electrode was polarized negatively by applying a current corresponding to a C/20 rate calculated on the theoretical capacity of graphite (385 mAh) delivered in 20 hours. As can be seen from figure 8, solid line, the final voltage of 0.01 mV is obtained in 68 hours. This excess capacity, which is not reversible, is the signature of solvent co-intercalation followed by reduction on the organic components of the electrolyte starting at 1.4 V. In contrast, also in Figure 8, dashed line, the trace for an electrolyte comprising a hindered glyme (diethylene glycol ethyl-*tert*-butyl ether) as that used in the invention, shows the voltage profile of lithium-only graphite intercalation, which is perfectly reversible. As seen from this example, the teaching of EP 2 270 917 A1 is not applicable to graphite negative electrode.

### Comparative example 2.

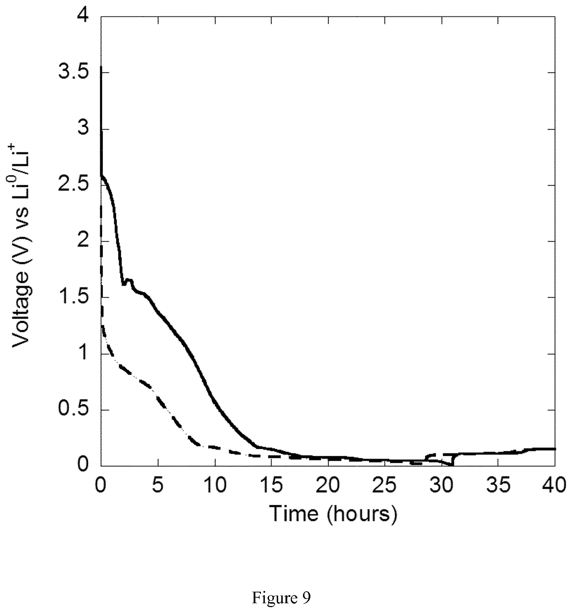

An electrolyte was made according to example 8 of EP 2 270 917 A1 by mixing 7.9 g of triethylene glycol dimethyl ether, 2.6 g of propylene carbonate 7.6 g of anhydrous LiPF6 with 40 mL of 2,2,2-trifloroethyl-1',1',2',2' tetrafluoroethyl ether. As in comparative example 1, this electrolyte was tested in an electrochemical cell: lithium metal/electrolyte under testing/graphite. The graphite electrode was polarized negatively by applying a current corresponding to a C/20 rate calculated on the theoretical capacity of graphite (385 mAh) delivered in 20 hours. As can be seen from figure 9, in similarity to figure of comparative example 1, reduction of the electrolyte starting at 1.6 V is visible (solid line). In contrast, also in Figure 9 (dashed line), the trace for the electrolyte comprising a hindered glyme (Tert-G2) used in the invention shows the voltage profile of lithium-only graphite intercalation. It is also worth to be noted that the electrolyte of comparative example 2 could deliver a discharge capacity of only 260 mAh/g (decreasing trend), whereas cells cycled with the hindered glyme electrolyte tdelivered a discharge capacity of 350 mAh/g with stable capacity retention. As seen again from this example, the teaching of EP 2 270 917 A1 is not applicable to graphite electrode.

## Claims

1. An electrochemical cell comprising:
a) an electrolyte composition comprising a sterically hindered glyme of general formula (I): 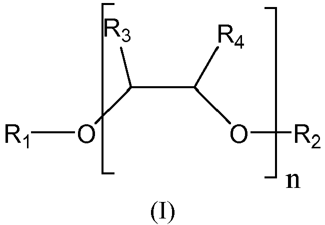 or mixtures thereof,
wherein:
n is 1 or 2;
R₁ is a linear C₁-C₂ alkyl;
R₂ is a linear or branched C₃-C₆ alkyl;
R₃ is selected from H and methyl;
R₄ is selected from H and methyl;
with the proviso that R₃ and R₄ can not be simultaneously a methyl group; and
b) a negative electrode, wherein said negative electrode comprises a negative electrode material comprising graphite.

2. The electrochemical cell accoding to claim 1, wherein R₂ is selected from n-propyl, iso-propyl, n-butyl, iso-butyl, sec-butyl and tert-butyl.

3. The electrochemical cell according to claim 1 or 2, wherein the sterically hindered glyme of formula (I) is selected from: 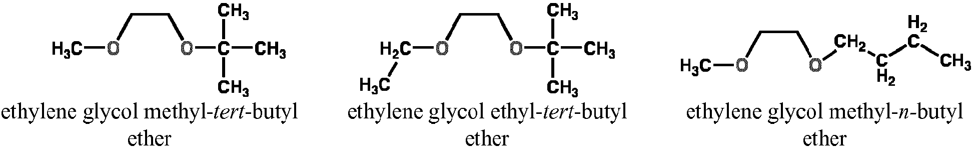 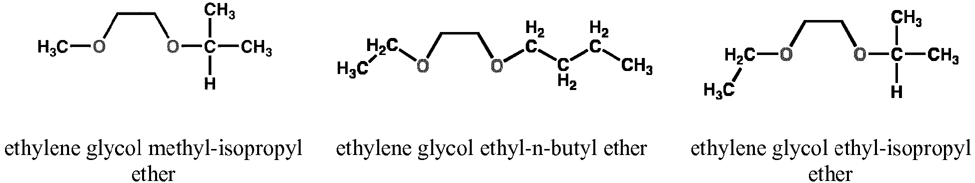 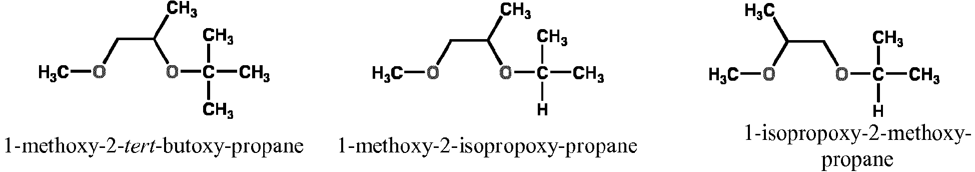 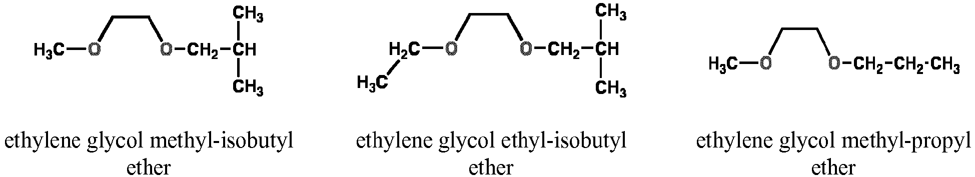 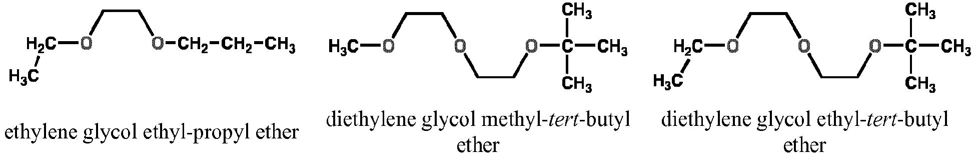 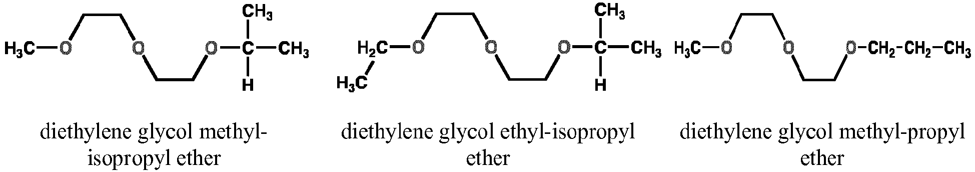 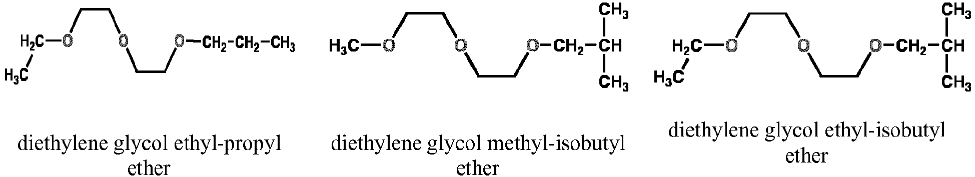 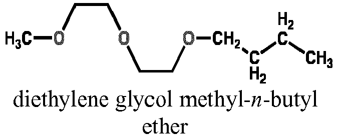 and mixtures thereof.

4. The electrochemical cell according to claim 3, wherein the sterically hindered glyme of formula (I) is selected from ethylene glycol methyl-tert-butyl ether, ethylene glycol ethyl-tert-butyl ether, ethylene glycol methyl-isopropyl ether, ethylene glycol ethyl-isopropyl ether, 1-methoxy-2-tert-butoxy-propane, 1-methoxy-2-isopropoxy-propane, 1-isopropoxy-2-methoxy-propane, diethylene glycol methyl-tert-butyl ether, diethylene glycol ethyl-tert-butyl ether, diethylene glycol methyl-isopropyl ether, diethylene glycol ethyl-isopropyl ether, and mixtures thereof.

5. The electrochemical cell according to any of claims 1 to 4, wherein the electrolyte composition further comprises a co-solvent.

6. The electrochemical cell according to claim 5, wherein the co-solvent is selected from ethylene carbonate (EC), propylene carbonate (PC), dimethyl sulfone (DMS), ethyl-methyl-sulfone (EMS), tetramethylene sulfone (TMS), succinonitrile, adiponitrile, glutaronitrile, N-methyloxazolidinone, a tetraalkyl sulfonamide of formula R⁵R⁶NSO₂NR⁵R⁶, wherein R⁵ and R⁶ are independently selected from methyl and ethyl, and their mixtures.

7. The electrochemical cell according to any of claims 1 to 6, wherein the electrolyte composition further comprises a lithium salt or a sodium salt.

8. The electrochemical cell according to claim 7, wherein the lithium salt is selected from LiBF₄, LiAsF₆, LiI, LiCF₃SO₃, Li[(CF₃SO₂)₂N], LiPF₆, Li[(CF₃CF₂SO₂)₂N], Li[(C₂F₅SO₂)₂N], Li[(FSO₂)₂N], Li[(FSO₂)(C₄F₉SO₂)N], Li[(FSO₂)(CF₃CF₂SO₂)N], LiClO₄, LiB(C₂O₄)₂, Li[BF₂C₂O₄], the lithium salt of 4,5-dicyano-1,2,3-triazole, the lithium salt of 4,5-dicyano-2-trifluoromethyl-imidazole, the lithium salt of 4,5-dicyano-2-pentafluoroethyl-imidazole, and mixtures thereof.

9. The electrochemical cell according to claim 7, wherein the sodium salt is selected from NaBF₄, NaAsF₆, NaI, NaCF₃SO₃, Na[(CF₃SO₂)₂N], NaPF₆, Na[(CF₃CF₂SO₂)₂N], Na[(C₂F₅SO₂)₂N], Na[(FSO₂)₂N], Na[(FSO₂)(CF₃CF₂SO₂)N], Na[(FSO₂)(C₄F₉SO₂)N], NaClO₄, NaB(C₂O₄)₂, Na[BF₂C₂O₄], the sodium salt of 4,5-dicyano-1,2,3-triazole, the sodium salt of 4,5-dicyano-2-trifluoromethyl-imidazole, the sodium salt of 4,5-dicyano-2-pentafluoroethyl-imidazole, and mixtures thereof.

10. An energy storage device comprising at least an electrochemical cell as defined in any of claims 1 to 9.

11. The energy storage device according to claim 10 which is a lithium or sodium battery.

12. A lithium battery which comprises:
a) an electrolyte composition comprising a sterically hindered glyme of general formula (I) as defined in any of claims 1 to 4, a co-solvent and a lithium salt;
b) a negative electrode comprising a negative electrode material comprising graphite, natural or artificial, pure or admixed with non-graphitic carbon; and
c) a positive electrode.

13. The lithium battery according to claim 12, wherein the positive electrode comprises a material selected from:
- layered lithium oxides LiₓM'O₂, wherein M' is Co, Ni or Mn;
- spinels LiₓMnO₄,
where in both cases a fraction of less than 15% of the transition elements M' and Mn can be replaced by Al, Mg or Li;
- lithium phosphates LiₓM"PO₄, wherein M" is Fe or Mn, where a fraction of less than 10% of the transition element M" can be replaced by Mg;
- lithium fluoro phosphates Li₁₊ₓFePO₄F or LiₓFePO₃F₂;
- lithium fluoro sulfate LiₓFeSO₄F;
where in all cases 0 ≤ x ≤ 1, and mixtures thereof.

14. A sodium battery which comprises:
a) an electrolyte composition comprising a sterically hindered glyme of general formula (I) as defined in any of claims 1 to 4, a co-solvent and a sodium salt;
b) a negative electrode comprising a negative electrodde material comprising graphite, natural or artificial, pure or admixed with non-graphitic carbon; and
c) a positive electrode.

15. The sodium battery according to claim 14, wherein the positive electrode comprises a material selected from:
- NaₓFe_{1-y}Mn_{y}PO₄ of the olivine structure;
- NaₓMn_{1-y}Cr_{y}O₂;
- FePO₄F;
- NaₓFePO₃F₂,
- Na_{z}Fe_{0.5}Mn_{0.5}O₂,
and mixtures thereof,
wherein 0 ≤ x, y ≤ 1; 0.1 ≤ z ≤ 1.

## Patentansprüche

1. Elektrochemische Zelle, umfassend:
a) eine Elektrolytzusammensetzung, umfassend ein sterisch gehindertes Glyme der allgemeinen Formel (I): 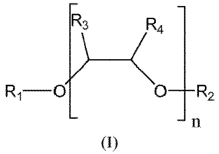 oder Mischungen davon,
wobei:
n 1 oder 2 ist;
R₁ ein lineares C₁-C₂ Alkyl ist;
R₂ ein lineares oder verzweigtes C₃-C₆ Alkyl ist;
R₃ ausgewählt ist aus H und Methyl;
R₄ ausgewählt ist aus H und Methyl;
unter der Voraussetzung, dass R₃ und R₄ nicht gleichzeitig eine Methylgruppe sein können; und
b) eine negative Elektrode, wobei die negative Elektrode ein Graphit umfassendes negatives Elektrodenmaterial umfasst.

2. Elektrochemische Zelle nach Anspruch 1, wobei R₂ ausgewählt ist aus *n*-Propyl, *iso-*Propyl, *n*-Butyl, *iso*-Butyl, *sec*-Butyl und *tert*-Butyl.

3. Elektrochemische Zelle nach Anspruch 1 oder 2, wobei das sterisch gehinderte Glyme der Formel (I) ausgewählt ist aus: 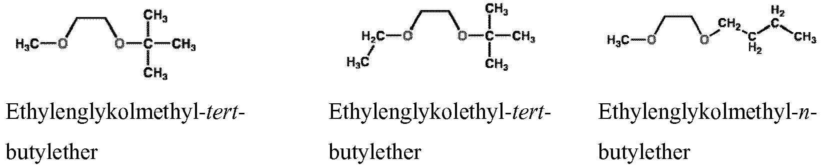 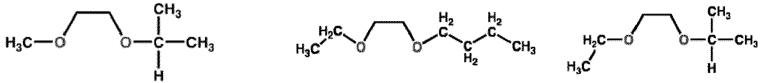 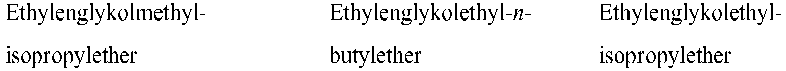 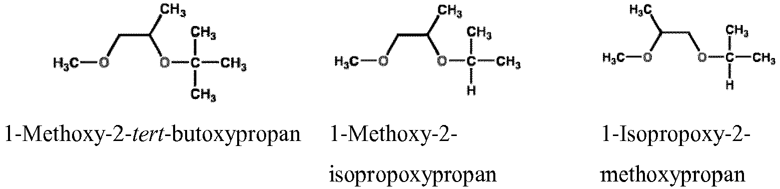 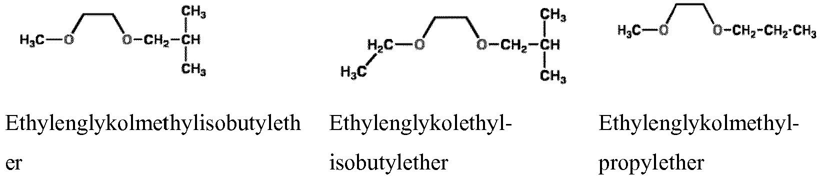 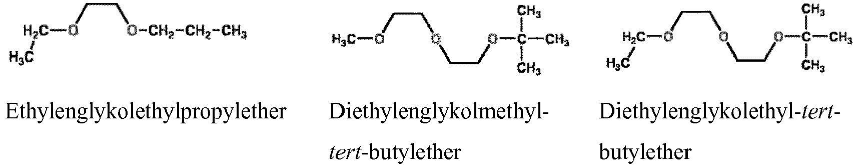 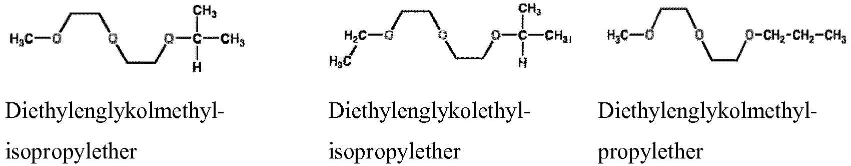 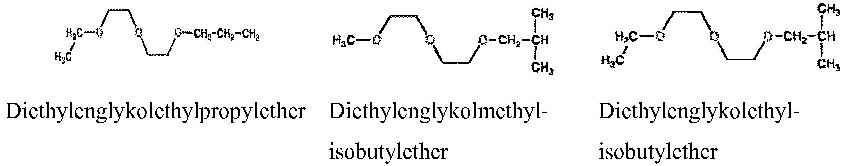 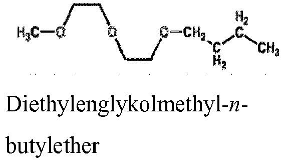 und Mischungen davon.

4. Elektrochemische Zelle nach Anspruch 3, wobei das sterisch gehinderte Glyme der Formel (I) ausgewählt ist aus Ethylenglykolmethyl-*tert*-butylether, Ethylenglykolethyl-*tert-*butylether, Ethylenglykolmethylisopropylether, Ethylenglykolethylisopropylether, 1-Methoxy-2-*tert*-butoxy-propan, 1-Methoxy-2-isopropoxypropan, 1-Isopropoxy-2-methoxypropan, Diethylenglykolmethyl-*tert*-butylether, Diethylenglykolethyl-*tert-*butylether, Diethylenglykolmethylisopropylether, Diethylenglykolethylisopropylether, und Mischungen davon.

5. Elektrochemische Zelle nach einem der Ansprüche 1 bis 4, wobei die Elektrolytzusammensetzung weiter ein Zusatz-Lösungsmittel umfasst.

6. Elektrochemische Zelle nach Anspruch 5, wobei das Zusatz-Lösungsmittel ausgewählt ist aus Ethylencarbonat (EC), Propylencarbonat (PC), Dimethylsulfon (DMS), Ethylmethyl-Sulfon (EMS), Tetramethylensulfon (TMS), Succinonitril, Adiponitril, Glutaronitril, N-Methyloxazolidinon, einem Tetraalkylsulfonamid der Formel R⁵R⁶NSO₂NR⁵R⁶, wobei R⁵ und R⁶ unabhängig ausgewählt sind aus Methyl und Ethyl, und deren Mischungen.

7. Elektrochemische Zelle nach einem der Ansprüche 1 bis 6, wobei die Elektrolytzusammensetzung weiter ein Lithiumsalz oder ein Natriumsalz umfasst.

8. Elektrochemische Zelle nach Anspruch 7, wobei das Lithiumsalz ausgewählt ist aus LiBF₄, LiAsF₆, LiI, LiCF₃SO₃, Li[(CF₃SO₂)₂N], LiPF₆, Li[(CF₃CF₂SO₂)₂N], Li[(C₂F₅SO₂)₂N], Li[(FSO₂)₂N], Li[(FSO₂)(C₄F₉SO₂)N], Li[(FSO₂)(CF₃CF₂SO₂)N], LiClO₄, LiB(C₂O₄)₂, Li[BF₂C₂O₄], dem Lithiumsalz von 4,5-Dicyan-1,2,3-triazol, dem Lithiumsalz von 4,5-Dicyan-2-trifluormethylimidazol, dem Lithiumsalz von 4,5-Dicyan-2-pentafluorethylimidazol, und Mischungen davon.

9. Elektrochemische Zelle nach Anspruch 7, wobei das Natriumsalz ausgewählt ist aus NaBF₄, NaAsF₆, NaI, NaCF₃SO₃, Na[(CF₃SO₂)₂N], NaPF₆, Na[(CF₃CF₂SO₂)₂N], Na[(C₂F₅SO₂)₂N], Na[(FSO₂)₂N], Na[(FSO₂)(CF₃CF₂SO₂)N], Na[(FSO₂)(C₄F₉SO₂)N], NaClO₄, NaB(C₂O₄)₂, Na[BF₂C₂O₄], dem Natriumsalz von 4,5-Dicyan-1,2,3-triazol, dem Natriumsalz von 4,5-Dicyan-2-trifluormethylimidazol, dem Natriumsalz von 4,5-Dicyan-2-pentafluorethylimidazol, und Mischungen davon.

10. Energiespeichervorrichtung, die mindestens eine elektrochemische Zelle nach einem der Ansprüche 1 bis 9 umfasst.

11. Energiespeichervorrichtung nach Anspruch 10, die eine Lithium- oder Natrium-Batterie ist.

12. Lithium-Batterie, umfassend:
a) eine Elektrolytzusammensetzung, die ein sterisch gehindertes Glyme der allgemeinen Formel (I) nach einem der Ansprüche 1 bis 4, ein Zusatz-Lösungsmittel und ein Lithiumsalz umfasst;
b) eine negative Elektrode, die ein Graphit umfassendes negatives Elektrodenmaterial umfasst, natürlich oder künstlich, rein oder mit nicht-graphitischem Kohlenstoff beigemischt; und
c) eine positive Elektrode.

13. Lithium-Batterie nach Anspruch 12, wobei die positive Elektrode ein Material umfasst, ausgewählt aus:
- geschichteten Lithiumoxiden LiₓM'O₂, wobei M' Co, Ni oder Mn ist;
- Spinellen LiₓMnO₄,
wobei in beiden Fällen ein Anteil von weniger als 15 % der Übergangselemente M' und Mn durch Al, Mg oder Li ersetzt werden kann;
- Lithiumphosphaten LiₓM"PO₄, wobei M" Fe oder Mn ist, wobei ein Anteil von weniger als 10 % des Übergangselements M" durch Mg ersetzt werden kann;
- Lithiumfluorphosphaten Li₁₊ₓFePO₄F oder LiₓFePO₃F₂;
- Lithiumfluorsulfat LiₓFeSO₄F;
wobei in allen Fällen 0 ≤ x ≤ 1, und Mischungen davon.

14. Natrium-Batterie, die umfasst:
a) eine Elektrolytzusammensetzung, die ein sterisch gehindertes Glyme der allgemeinen Formel (I) nach einem der Ansprüche 1 bis 4, ein Zusatz-Lösungsmittel und ein Natriumsalz umfasst;
b) eine negative Elektrode, die ein Graphit umfassendes negatives Elektrodenmaterial umfasst, natürlich oder künstlich, rein oder mit nicht-graphitischem Kohlenstoff beigemischt; und
c) eine positive Elektrode.

15. Natrium-Batterie nach Anspruch 14, wobei die positive Elektrode ein Material umfasst, ausgewählt aus:
- NaₓFe_{1-y}Mn_{y}PO₄ der Olivinstruktur;
- NaₓMn_{1-y}Cr_{y}O₂;
- FePO₄F;
- NaₓFePO₃F₂,
- Na_{Z}Fe_{o.5}Mn_{o.5}O₂,
und Mischungen davon,
wobei 0 ≤ x, y ≤ 1; 0.1 ≤ z ≤ 1.

## Revendications

1. Cellule électrochimique comportant :
a) une composition d'électrolyte comportant un glyme stériquement bloqué, de formule générale (I) : 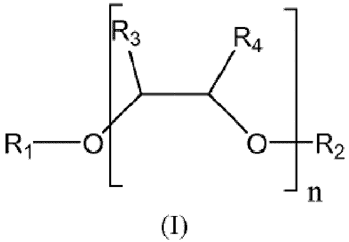 ou des mélanges de celui-ci,
dans laquelle :
n est égal à 1 ou 2,
R₁ est un alkyle en C₁ à C₂ linéaire,
R₂ est un alkyle en C₃ à C₆ linéaire ou ramifié,
R₃ est choisi parmi H et un méthyle,
R₄ est choisi parmi H et un méthyle,
à condition que R₃ et R₄ ne puissent pas être simultanément un groupe méthyle, et
b) une électrode négative, dans laquelle ladite électrode négative comporte un matériau d'électrode négative comportant du graphite.

2. Cellule électrochimique selon la revendication 1, dans laquelle R₂ est choisi parmi un n-propyle, un isopropyle, un n-butyle, un isobutyle, un butyle secondaire et un butyle tertiaire.

3. Cellule électrochimique selon la revendication 1 ou 2, dans laquelle le glyme stériquement bloqué de formule (I) est choisi parmi : 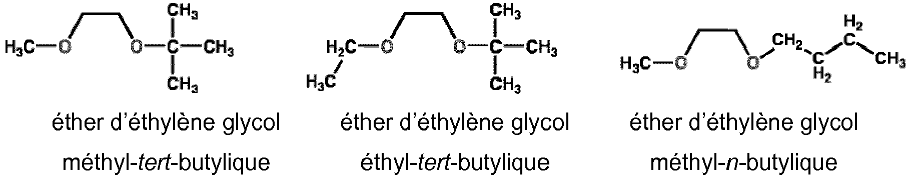 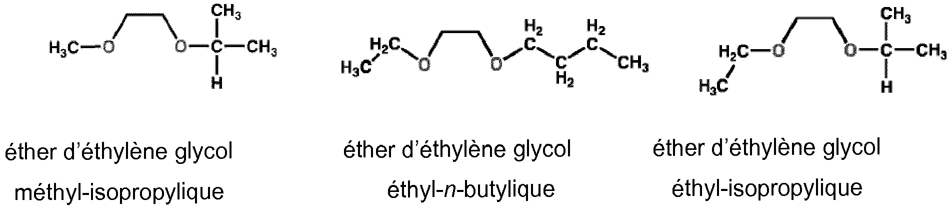 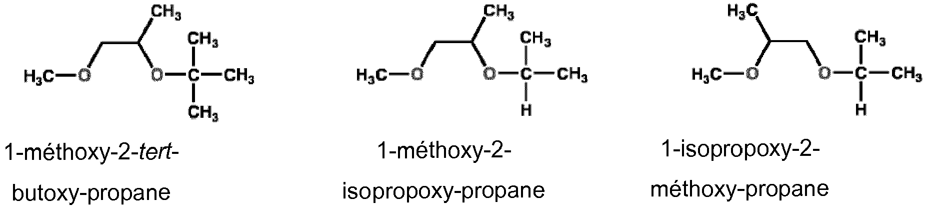 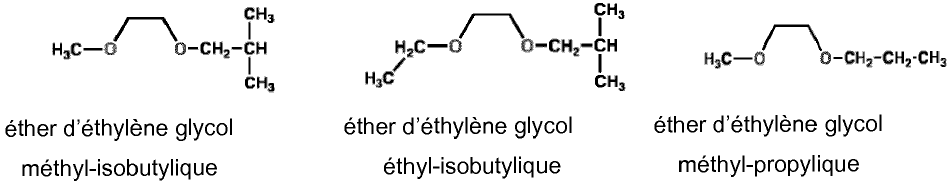 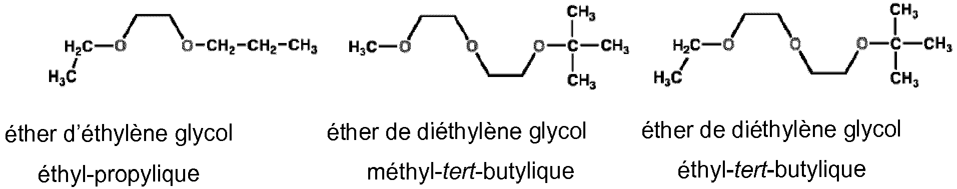 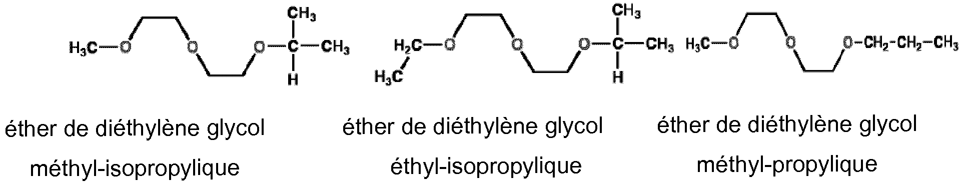 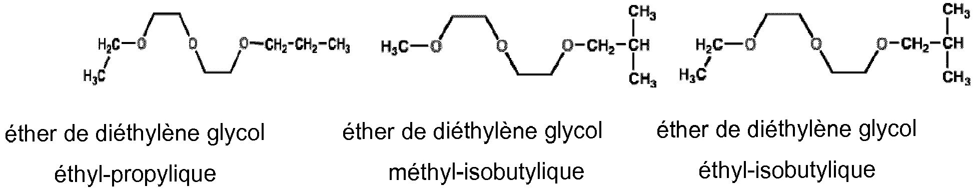 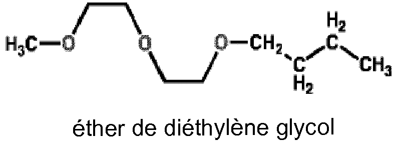 méthyl-*n*-butylique
et des mélanges de ceux-ci.

4. Cellule électrochimique selon la revendication 3, dans laquelle le glyme stériquement bloqué de formule (I) est choisi parmi l'éther d'éthylène glycol méthyl-tert-butylique, l'éther d'éthylène glycol éthyl-tert-butylique, l'éther d'éthylène glycol méthyl-isopropylique, l'éther d'éthylène glycol éthyl-isopropylique, le 1-méthoxy-2-tert-butoxy-propane, le 1-méthoxy-2-isopropoxy-propane, le 1-isopropoxy-2-méthoxy-propane, l'éther de diéthylène glycol méthyl-tert-butylique, l'éther de diéthylène glycol éthyl-tert-butylique, l'éther de diéthylène glycol méthyl-isopropylique, l'éther de diéthylène glycol éthyl-isopropylique et des mélanges de ceux-ci.

5. Cellule électrochimique selon l'une quelconque des revendications 1 à 4, dans laquelle la composition d'électrolyte comporte en outre un co-solvant.

6. Cellule électrochimique selon la revendication 5, dans laquelle le co-solvant est choisi parmi le carbonate d'éthylène (EC), le carbonate de propylène (PC), la diméthyl sulfone (DMS), l'éthyl-méthyl-sulfone (EMS), la tétraméthylène sulfone (TMS), le succinonitrile, l'adiponitrile, le glutaronitrile, la N-méthyloxazolidinone, un sulfonamide de tétraalkyle de formule R⁵R⁶NSO₂NR⁵R⁶, dans laquelle R⁵ et R⁶ sont choisis indépendamment l'un de l'autre parmi un méthyle et un éthyle, et leurs mélanges.

7. Cellule électrochimique selon l'une quelconque des revendications 1 à 6, dans laquelle la composition d'électrolyte comporte en outre un sel de lithium ou un sel de sodium.

8. Cellule électrochimique selon la revendication 7, dans laquelle le sel de lithium est choisi parmi LiBF₄, LiAsF₆, Lil, LiCF₃SO₃, Li[(CF₃SO₂)₂N], LiPF₆, Li[(CF₃CF₂SO₂)₂N], Li[(C₂F₅SO₂)₂N], Li[(FSO₂)₂N], Li[(FSO₂)(C₄F₉SO₂)N], Li[(FSO₂)(CF₃CF₂SO₂)N], LiClO₄, LiB(C₂O₄)₂, Li[BF₂C₂O₄], le sel de lithium de 4,5-dicyano-1,2,3-triazole, le sel de lithium de 4,5-dicyano-2-trifluorométhyl-imidazole, le sel de lithium de 4,5-dicyano-2-pentafluoroéthyl-imidazole, et des mélanges de ceux-ci.

9. Cellule électrochimique selon la revendication 7, dans laquelle le sel de sodium est choisi parmi NaBF₄, NaAsF₆, Nal, NaCF₃SO₃, Na[(CF₃SO₂)₂N], NaPF₆, Na[(CF₃CF₂SO₂)₂N], Na[(C₂F₅SO₂)₂N], Na[(FSO₂)₂N], Na[(FSO₂)(CF₃CF₂SO₂)N], Na[(FSO₂)(C₄F₉SO₂)N],, NaClO₄, NaB(C₂O₄)₂, Na[BF₂C₂O₄], le sel de sodium de 4,5-dicyano-1,2,3-triazole, le sel de sodium de 4,5-dicyano-2-trifluorométhyl-imidazole, le sel de sodium de 4,5-dicyano-2-pentafluoroéthyl-imidazole, et des mélanges de ceux-ci.

10. Dispositif de stockage d'énergie comportant au moins une cellule électrochimique selon l'une quelconque des revendications 1 à 9.

11. Dispositif de stockage d'énergie selon la revendication 10 qui est une batterie au lithium ou au sodium.

12. Batterie au lithium qui comporte :
a) une composition d'électrolyte comportant un glyme stériquement bloqué de formule générale (I) définie selon l'une quelconque des revendications 1 à 4, un co-solvant et un sel de lithium,
b) une électrode négative comportant un matériau d'électrode négative comportant du graphite, naturel ou artificiel, pur ou enrichi de carbone non graphitique, et
c) une électrode positive.

13. Batterie au lithium selon la revendication 12, dans laquelle l'électrode positive comporte un matériau choisi parmi :
- des oxydes de lithium stratifiés LiₓM'O₂, dans lesquels M' représente Co, Ni ou Mn,
- des spinelles LiₓMnO₄,
où, dans les deux cas, une fraction de moins de 15 % des éléments de transition M' et Mn peut être remplacée par Al, Mg ou Li,
- des phosphates de lithium LiₓM"PO₄, dans lesquels M" représente Fe ou Mn, où une fraction de moins de 10 % de l'élément de tension M" peut être remplacée par Mg,
- des fluorophosphates de lithium Li₁₊ₓFePO₄F ou LiₓFePO₃F₂,
- des fluorosulfates de lithium LiₓFeSO₄F,
où, dans tous les cas, 0 ≤ x ≤ 1, et des mélanges de ceux-ci.

14. Batterie au sodium qui comporte :
a) une composition d'électrolyte comportant un glyme stériquement bloqué de formule générale (I) définie selon l'une quelconque des revendications 1 à 4, un co-solvant et un sel de sodium,
b) une électrode négative comportant un matériau d'électrode négative comportant du graphite, naturel ou artificiel, pur ou enrichi de carbone non graphitique, et
c) une électrode positive.

15. Batterie au sodium selon la revendication 14, dans laquelle l'électrode positive comporte un matériau choisi parmi :
- NaₓFe_{1-y}Mn_{y}PO₄ de la structure d'olivine,
- NaₓMn_{1-y}Cr_{y}O₂,
- FePO₄F,
- NaₓFePO₃F₂,
- Na_{z}Fe_{0,5}Mn_{0,5}O₂,
et des mélanges de ceux-ci,
dans laquelle 0 ≤ x, y ≤ 1, 0,1 ≤ z ≤ 1.
